# EUROPÄISCHE PATENTSCHRIFT

(11) **EP 3 468 820 B1**
(45) Veröffentlichungstag und Bekanntmachung des Hinweises auf die Patenterteilung: **29.04.2020**
(21) Anmeldenummer: 17730670.1
(22) Anmeldetag: 13.06.2017
(51) Int. Cl.: B60J 5/04, E02D 3/026, E01C 19/27

(54) **BAUMASCHINE, INSBESONDERE BODENVERDICHTUNGSMASCHINE, SPEZIELL GUMMIRADWALZE, VERFAHREN ZUM BETRIEB EINER BAUMASCHINE UND VERFAHREN ZUM HERSTELLEN EINER BAUMASCHINE**
CONSTRUCTION MACHINE, IN PARTICULAR A SOIL COMPACTING MACHINE, SPECIFICALLY A RUBBER-WHEELED ROLLER, METHOD FOR OPERATING A CONSTRUCTION MACHINE AND METHOD FOR PRODUCING A CONSTRUCTION MACHINE
ENGIN DE CHANTIER, EN PARTICULIER ENGIN DE COMPACTAGE DU SOL, PLUS SPÉCIFIQUEMENT COMPACTEUR À PNEU, PROCÉDÉ DE FONCTIONNEMENT D'UN ENGIN DE CHANTIER ET PROCÉDÉ DE FABRICATION D'UN ENGIN DE CHANTIER

(30) Priorität: 13.06.2016 DE 102016007169
(43) Veröffentlichungstag der Anmeldung: 17.04.2019
(73) Patentinhaber: BOMAG GmbH, 56154 Boppard (DE)
(72) Erfinder: KLEIN, Thomas, 56653 Wehr (DE); HAUBRICH, Thomas, 56290 Gödenroth (DE)
(74) Vertreter: Heidler, Philipp
(86) Internationale Anmeldenummer: PCT/EP2017/000688
(87) Internationale Veröffentlichungsnummer: WO 2017/215785

(56) Entgegenhaltungen:
- DE-U1- 9 308 801
- DE-U1- 20 020 088
- DE-U1-202011 104 134
- FR-A- 1 038 530
- US-A1- 2015 167 258

## Beschreibung

Die Erfindung betrifft eine Baumaschine, insbesondere eine Bodenverdichtungsmaschine, speziell eine Gummiradwalze, ein Verfahren zum Betrieb einer Baumaschine sowie ein Verfahren zum Herstellen einer Baumaschine.

Bodenverdichtungsmaschinen sind z.B. aus FR 1 038 530 A, DE 93 08 801 U1, US 2015/0167258 A1 und DE 200 20 088 U1 bekannt.

Insbesondere selbstfahrende Baumaschinen weisen häufig eine Fahrerkabine auf, von der aus die Bedienung der Baumaschine im Arbeitsbetrieb erfolgt. Die Fahrerkabine umfasst üblicherweise eine Frontscheibe, eine Heckscheibe, ein Dach und in Fahrrichtung der Baumaschine gesehen zur rechten und zur linken Seite der Baumaschine Seitenwände mit jeweils häufig einer Tür-Fenster-Einheit. Die Angaben rechts und links beziehen sich dabei auf eine Fahrrichtung der Baumaschine, insbesondere eine Vorwärtsfahrrichtung. Die Tür-Fenster-Einheit ermöglicht einerseits den Zutritt von außen in die Fahrerkabine und andererseits einen Ausblick aus dem Inneren der Fahrerkabine zu den Seiten nach außen. Die Tür-Fenster-Einheiten sind bekanntermaßen zwischen einer geschlossenen und einer geöffneten Position verstellbar. Eine solche Fahrerkabine ist beispielsweise aus DE 20 2011 104 134 U1 bekannt. Von der Erfindung mit umfasst sind dabei auch solche Tür-Fenster-Einheiten, die ein Türelement und ein Fensterelement aufweisen, wobei das Fensterelement vom Türelement rahmenartig umgeben oder zumindest einseitig mit diesem abschließend ausgebildet sein kann. Auch Tür-Fenster-Einheiten, die keine Relativbewegung von Tür und Fenster zueinander ermöglichen, sind mit umfasst. Die Tür-Fenster-Einheit kann über geeignete Scharniere, insbesondere Schwenkscharniere, oder sonstige Gelenke, auch Verschiebegelenke, an einem Rahmen der Fahrerkabine und/oder einem Teil der Seitenwand angelenkt sein.

Gattungsgemäße Baumaschinen sind selbstfahrend ausgebildet und weisen dazu einen Antriebsmotor, insbesondere einen Dieselmotor, auf. Ferner sind eine vordere und eine hintere Fahreinrichtung vorhanden. Die Erfindung betrifft insbesondere zur Bodenverdichtung vorgesehene Baumaschinen. Die Fahreinrichtungen umfassen insbesondere Gummiräder. Die vordere Fahreinrichtung bezeichnet die in eine Vorwärtsrichtung vorn angeordnete und die hintere Fahreinrichtung die in Bezug auf diese Vorwärtsrichtung hinten angeordnete Fahreinrichtung. Solche gattungsgemäßen Bodenverdichtungsmaschinen sind vorliegend insbesondere sogenannte Gummiradwalzen oder Kombiwalzen. Bei Gummiradwalzen umfassen die vordere und die hintere Fahreinrichtung jeweils eine Mehrzahl von Gummirädern und bei Kombiwalzen weist die eine Fahreinrichtung Gummiräder und die andere Fahreinrichtung wenigstens eine Walzbandage auf. Derartige Walzen der Anmelderin sind beispielsweise unter der Typenbezeichnung BW 27 RH der Anmelderin bekannt.

Es treten häufig Arbeitssituationen auf, bei denen es erforderlich ist, dass der Fahrer in Fahrrichtung eine Maschinenseite rechts oder links vom Fahrstand aus besonders gut einsehen muss, beispielsweise wenn die Baumaschine möglichst nah an einem Hindernis oder ähnlichem vom Fahrer vorbeigeführt werden soll. Dies tritt insbesondere bei Bodenverdichtungsmaschinen auf, wenn der nah an einem Hindernis, beispielsweise einem Bordstein, liegende Untergrund verdichtet werden soll. In der Praxis hat es sich daher etabliert, dass insbesondere in solchen Situationen der Fahrer zur Verbesserung der Sichtverhältnisse die Tür-Fenster-Einheit, insbesondere zumindest das Fensterelement, in die geöffnete Position verstellt, um ein verbessertes Blickfeld zu erlangen. Dazu kann er sich beispielsweise auch aus der geöffneten Tür-Fenster-Einheit herauslehnen. Allerdings werden in dieser Situation häufig Teile der Fahrerkabine, wie beispielsweise Tür-/Fensterscharniere oder die geöffnete Tür-Fenster-Einheit oder Teile davon, als hinderlich empfunden. Die vorstehend genannten Baumaschinen, insbesondere Walzen, werden häufig reversierend betrieben. Dies bedeutet, dass die Maschinen im Arbeitseinsatz häufig alternierend vorwärts und rückwärts über den zu bearbeitenden Bodenuntergrund fahren, um die gewünschte Bodenverdichtung zu erreichen. Die Auslegung bisher bekannter Fahrerkabinen wird dabei allerdings als unbefriedigend empfunden, da die Türen üblicherweise auf beiden Seiten in eine gleiche Fahrrichtung, d.h. in Vorwärtsfahrrichtung oder in Rückwärtsfahrrichtung, öffnend ausgebildet sind. Auf zumindest eine Seite der Baumaschine ist das Blickfeld für den Fahrer aus der Fahrerkabine damit durch Elemente der Tür-Fenster-Einheit, beispielsweise Türscharniere etc., eingeschränkt. Darüber hinaus müssen bei der Fertigung der Fahrerkabinen jeweils zwei unterschiedliche Türen hergestellt und vorrätig gehalten werden, da die in eine Fahrrichtung öffnenden Türen üblicherweise seitenverkehrt zueinander ausgebildet sind.

Ausgehend vom Stand der Technik ist es daher die Aufgabe der Erfindung, eine Möglichkeit anzugeben, den Bedienungskomfort für den Fahrer der Baumaschine zu erhöhen und dabei idealerweise auch die Herstellung der Baumaschine zu vereinfachen.

Die Lösung der Aufgabe gelingt mit einer Baumaschine und einem der Verfahren gemäß den unabhängigen Ansprüchen. Bevorzugte Weiterbildungen sind in den abhängigen Ansprüchen angegeben.

Die Grundidee der Erfindung liegt darin, dass die Tür-Fenster-Einheit der rechten Seite und die Tür-Fenster-Einheit der linken Seite von der geschlossenen Position in die geöffnete Position in eine Fahrrichtung gesehen zumindest teilweise in einander entgegengesetzte Richtungen verstellbar sind. Konkret bedeutet dies, dass die Tür-Fenster-Einheit der einen Seite in Fahrrichtung (insbesondere in Vorwärtsrichtung) öffenbar ist und die Tür-Fenster-Einheit der anderen Seite der Baumaschine entgegen dieser Fahrrichtung (d.h. insbesondere entgegen der Vorwärtsrichtung bzw. in Rückwärtsrichtung) öffenbar ist. Bei aufschwenkenden Tür-Fenster-Einheiten liegt somit bezogen auf eine horizontale Mittelachse quer zur Vorwärtsrichtung der Maschine die Schwenkachse der Tür-Fenster-Einheit auf der einen Seite in Fahrrichtung versetzt und auf der anderen Seite entgegen dieser Fahrrichtung versetzt an der Fahrerkabine. Aus der Sicht des in eine Fahrrichtung aus dem Fahrstand blickenden Fahrers liegt die Schwenkachse der Tür-Fenster-Einheit auf der einen Seite somit in diese Fahrrichtung nach vorn versetzt und die Tür-Fenster-Einheit auf der anderen Seite somit entgegen diese Fahrrichtung nach hinten versetzt vom Fahrer bzw. die eine Tür-Fenster-Einheit öffnet in Richtung dieser Fahrrichtung und die andere Tür-Fenster-Einheit entgegen dieser Fahrrichtung. Diese Fahrrichtung kann insbesondere als Bezugsrichtung die Vorwärtsrichtung der Maschine sein. Wesentlich ist somit, dass eine Vorwärtsrichtung definiert wird, wobei es hier nicht darauf ankommt, dass die Maschine auch rückwärts fahren kann und im Einsatzbetrieb regelmäßig zwischen Vorwärts- und Rückwärtsfahrt wechselt. Bei der Öffnungsbewegung in und entgegen der jeweiligen Fahrrichtung wird die jeweilige Tür-Fenster-Einheit somit zumindest teilweise in und auf der anderen Seite entgegen der Fahrrichtung, insbesondere Vorwärtsrichtung, bewegt, beispielsweise aufgeschoben oder aufgeschwenkt. Damit ist es möglich, dass der Fahrer auf der einen Seite der Fahrerkabine den vorn liegenden Teil der Tür-Fenster-Einheit aus seinem Blickfeld verstellen kann, indem er die entsprechende Tür-Fenster-Einheit in Vorwärtsrichtung gesehen nach hinten öffnet. Auf der gegenüberliegenden Seite der Fahrerkabine kann er dagegen den hinten liegenden Teil der Tür-Fenster-Einheit aus seinem Blickfeld verstellen, indem er die entsprechende Tür-Fenster-Einheit in Vorwärtsrichtung gesehen nach vorn öffnet. Insgesamt ermöglicht diese spezielle Anordnung der Tür-Fenster-Einheiten der Fahrerkabine somit sowohl bei Vorwärtsfahrt als auch bei Rückwärtsfahrt der Baumaschine auf jeweils einer Seite der Baumaschine die Möglichkeit, die Tür-Fenster-Einheit so zu öffnen, dass sie den Blick des Fahrers aus der Fahrerkabine heraus an den Seiten der Baumaschine entlang auf die vordere oder hintere Fahreinrichtung nicht behindert. Damit steht für jede Fahrrichtung (vorwärts oder rückwärts) eine Seite der Baumaschine zur Verfügung, auf der der Fahrer die Tür-Fenster-Einheit derart öffnen kann, dass sie aus seinem Blickfeld auf die jeweilige Fahreinrichtung entfernt wird. Wesentlich ist somit, dass die beiden Tür-Fenster-Einheiten auf den Seiten der Maschine somit in einer horizontalen Referenzebene in Bezug auf einen Uhrzeigersinn beide gleichsinnig öffnen.

Die konkrete Lagerung und Anlenkung der Tür-Fenster-Einheit an der übrigen Fahrerkabine kann variieren. Bevorzugt ist es, wenn die Fahrerkabine auf beiden Seiten Fahrzeugsäulen umfasst, und wenn die Tür-Fenster-Einheiten jeweils an einer Fahrzeugsäule angeordnet sind, wobei die Tür-Fenster-Einheit auf der einen Seite in eine Fahrrichtung, insbesondere Vorwärtsrichtung, gesehen an einer vorn liegende Fahrzeugsäule und die Tür-Fenster-Einheit auf der anderen Seite in diese Fahrtrichtung, insbesondere Vorwärtsrichtung, gesehen an einer hinten liegende Fahrzeugsäule angeordnet ist. Die Fahrzeugsäulen sind teilweise nicht nur Tragstruktur, sondern können insbesondere auch zum Insassenschutz dienen, beispielsweise als Teil einer Käfigstruktur (ROPS; roll over protection structure). Dabei sind auf der rechten Seite (mit Blickrichtung in Vorwärtsrichtung) und auf der linken Seite häufig jeweils zwei in Fahrrichtung, insbesondere Vorwärtsrichtung, zueinander beabstandete Fahrzeugsäulen vorgesehen. Dies umfasst somit auf jeder Seite von vorn nach hinten wenigstens eine A-Säule (in Vorwärtsrichtung vorderste Fahrzeugsäule) und eine B-Säule (in Vorwärtsrichtung nach der A-Säule kommende Fahrzeugsäule), kann aber auch weitere Fahrzeugsäulen (C-Säule etc.) aufweisen. Wesentlich ist nun, dass die beiden Tür-Fenster-Einheiten erfindungsgemäß nicht an Fahrzeugsäulen auf gleicher Höhe (d.h. Position quer zu einer Fahrrichtung in einer horizontalen Referenzebene), d.h. beide jeweils an einer A-Säule oder an einer B-Säule oder an einer C-Säule etc. gelagert, insbesondere angeschlagen, sind, sondern an in Bezug auf die Reihenfolge unterschiedlichen Fahrzeugsäulen bzw. an Fahrzeugsäulen auf unterschiedlicher Höhe, beispielsweise auf der linken Seite an der A-Säule und auf der rechten Seite an der B-Säule. Dadurch kann der Fahrer die eine Tür-Fenster-Einheit in Fahrrichtung, insbesondere Vorwärtsrichtung, und die andere Tür-Fenster-Einheit entgegen dieser Fahrrichtung, insbesondere entgegen der Vorwärtsrichtung, bequem öffnen.

Wie vorstehend erwähnt, kann eine Tür-Fenster-Einheit neben einer öffenbaren Tür auch ein gegenüber der Tür öffenbares bzw. unabhängig von diesem verstellbares Fenster aufweisen. Wesentlich ist nun, dass die Türen und/oder Fenster der beiden Seiten zueinander gegenläufig in der vorstehend beschriebenen Weise angeordnet sind, wobei es bevorzugt ist, wenn die Tür und das Fenster einer Seite jeweils in die gleiche Richtung öffenbar angeordnet sind.

Die Vorteile der Erfindung treten insbesondere bei solchen Baumaschinen hervor, die eine zueinander versetzte Anordnung der vorderen und hinteren Fahreinrichtungen quer zur Fahrrichtung aufweisen. Dies ist insbesondere häufig bei Bodenverdichtungsmaschinen, insbesondere Gummiradwalzen und Kombiwalzen, der Fall. Die versetzte Anordnung der vorderen und hinteren Fahreinrichtungen ist so zu verstehen, dass die vorderen und hinteren Fahreinrichtungen an zu einander gegenüberliegenden Seiten jeweils eine Nullseite aufweisen, auf der sie mit einer ihrer Stirnseiten zumindest bündig mit einer Seite des Maschinenrahmens abschließen oder über diesen sogar nach außen (bzw. in Fahrrichtung gesehen zur Seite) vorstehen. Auf der anderen Seite der jeweiligen Fahreinrichtung verläuft die andere Stirnseite dagegen häufig etwas zur Maschinenmitte hin versetzt. Die Maschinenmitte der Baumaschine verläuft in Fahrrichtung der Baumaschine und weist in einer horizontalen Referenzebene jeweils den gleichen Abstand zu den maximalen Außenpunkten des Maschinenrahmens quer zur Fahrrichtung auf. Konkret bedeutet dies somit beispielsweise, dass die vordere Fahreinrichtung rechtsbündig und die hintere Fahreinrichtung linksbündig abschließend mit dem Maschinenrahmen angeordnet ist (oder umgekehrt) oder beispielsweise auf der rechten Seite vorn und auf der linken Seite hinten jeweils über den Maschinenrahmen vorstehen (oder umgekehrt). Die vordere Fahreinrichtung ist dagegen auf der linken Seite und die hintere Fahreinrichtung auf der rechten Seite mit ihrer jeweiligen Stirnseite etwas zur Maschinenmitte hin versetzt. Die Tür-Fenster-Einheiten sind erfindungsgemäß bevorzugt nun derart angeordnet, dass sie in Richtung von der auf der jeweiligen Nullseite befindlichen Fahreinrichtung weg öffenbar sind. Dies bedeutet mit anderen Worten, dass die Tür-Fenster-Einheiten auf den jeweiligen Seiten der Fahrerkabine auf ihrer Seite in Richtung von der auf ihrer Seite auf der Nullseite befindlichen Fahreinrichtung weg gerichtet öffenbar sind. Vom Fahrstand aus gesehen befindet sich die geöffnete Tür-Fenster-Einheit dann somit jeweils hinter dem Fahrer, wenn er auf die jeweilige nullseitige Fahreinrichtung blickt. Der beim Öffnen der jeweiligen Tür-Fenster-Einheit entstehende Öffnungsspalt befindet sich dagegen vom Fahrer aus gesehen auf der auf der jeweiligen Nullseite befindlichen Seite. Sind die Tür-Fenster-Einheiten beispielsweise schwenkbar ausgebildet, liegen die Schwenkscharniere der jeweiligen Tür-Fenster-Einheit jeweils auf der der nullseitigen angeordneten Fahreinrichtung abgewandten Seite der Tür-Fenster-Einheit. Die vorstehenden Ausführungen beziehen sich dabei auf jeweils die eine Tür-Fenster-Einheit, die auf der Seite der Fahrerkabine angeordnet ist, auf der die vordere oder hintere Fahreinrichtung mit ihrer Nullseite angeordnet ist. Damit ist es möglich, dass der Fahrer optimale Sichtverhältnisse auf die Nullseite der jeweiligen Fahreinrichtung erhält, da er auf der jeweiligen Seite der Fahrerkabine, auf der die Nullseite der jeweiligen Fahreinrichtung liegt, die Tür-Fenster-Einheit aus dem Blickfeld auf diese Nullseite heraus bewegen kann. Damit unterscheiden sich die erfindungsgemäßen Baumaschinen von den bisher üblichen Baumaschinen dadurch, dass die Tür-Fenster-Einheiten der Fahrerkabine auf beiden Seiten nicht in jeweils die gleiche Fahrrichtung öffenbar sind, sondern in einander entgegengesetzte Richtungen, wobei dies zusätzlich bevorzugt auf den Versatz der vorderen und hinteren Fahreinrichtung abgestimmt ist.

Grundsätzlich ist es möglich, Tür-Fenster-Einheiten über verschiedene Mechanismen zwischen der geschlossenen und der geöffneten Position zu bewegen. Bevorzugt ist es jedoch, wenn die Tür-Fenster-Einheiten über ein Türscharnier an einem Rahmen der Fahrerkabine, insbesondere jeweils einer Fahrzeugsäule, gelagert sind und zwischen ihrer geschlossenen Position ihrer geöffneten Position um eine Schwenkachse verschwenkbar sind. Entsprechende Türscharniere sind günstig und äußerst funktionszuverlässig. Diese erfindungsgemäße Anordnung hat zur Folge, dass die beiden Tür-Fenster-Einheiten somit in Bezug auf eine horizontale Referenzebene gleichsinnig von ihrer geschlossenen Position in die geöffnete Position und umgekehrt verschwenkt werden. Die Tür-Fenster-Einheit auf der einen Seite der Baumaschine, insbesondere der rechten Seite, ist somit an ihrem in Vorwärtsrichtung gesehen hinteren Randbereich und die Tür-Fenster-Einheit auf der anderen Seite der Baumaschine, insbesondere der linken Seite, ist an ihrem in Vorwärtsrichtung gesehen fordern Randbereich an der Fahrerkabine angelenkt. Die Tür-Fenster-Einheit auf der linken Seite ist somit in Bezug auf eine Fahrrichtung der Baumaschine auf anderer Höhe beispielsweise (vorn) an der Fahrerkabine als die Tür-Fenster-Einheit auf der rechten Seite (beispielsweise hinten) angeordnet. Die Anlenkung der Tür-Fenster-Einheit erfolgt dabei entweder an einem Rahmenteil der Fahrerkabine oder an einem Randbereich einer Seitenwand der Fahrerkabine. Der Randbereich bezeichnet dabei insbesondere einen sich über maximal 25%, insbesondere maximal 15% der maximalen Länge der Seitenwand in eine Fahrrichtung in einer horizontalen Referenzebene erstreckenden Bereich der Seitenwand von einem Ende der Seitenwand bis hin zur Anlenkung der Tür-Fenster-Einheit.

Die Tür-Fenster-Einheit bezeichnet somit einen verstellbaren Seitenverschluss der Fahrerkabine, über den der Zutritt in die Fahrerkabine möglich ist. Grundsätzlich ist es dabei möglich, dass die Tür-Fenster-Einheit ausschließlich ein, insbesondere starres, Türelement, insbesondere mit einer transparenten Fensterscheibe, aufweist. Optimal ist es jedoch, wenn die Tür-Fenster-Einheit ein Türelement und ein separat dazu verstellbares Fensterelement umfasst. Das Fensterelement ist bevorzugt unabhängig vom Türelement öffenbar. Das Fensterelement kann insbesondere eine transparente Scheibe sein oder zumindest umfassen. Das Fensterelement kann insbesondere bei in geschlossener Position befindlichem Türelement separat von diesem in eine geöffnete Position gebracht, insbesondere verschwenkt, werden. Der Fahrer hat damit die Möglichkeit, trotz geschlossener Tür im Arbeitsbetrieb der Baumaschine separat das Fensterelement zur Verbesserung der Sichtverhältnisse zu öffnen. Sofern vorstehend von einer zumindest teilweise in einer geöffneten Position befindlichen Tür-Fenster-Einheit die Rede ist, bedeutet dies somit insbesondere, dass entweder die Tür-Fenster-Einheit als Ganzes oder nur das Fensterelement der Tür-Fenster-Einheit in einer geöffneten Position vorliegt. Im praktischen Einsatz hatte sich ferner bewährt, wenn das Fensterelement und das Türelement einer Seite der Baumaschine bzw. einer Tür-Fenster-Einheit gleichsinnig öffnen. Die Verstellbewegung des Türelements und des Fensterelements von der geschlossenen Position in die geöffnete Position und umgekehrt erfolgt somit bevorzugt gleichsinnig in gleiche Bewegungsrichtungen. Dies ist insbesondere dann von Vorteil, wenn der Fahrer die Fahrerkabine betreten oder verlassen möchte, da er dann beide Elemente in die gleiche Richtung und nicht gegenläufig bewegen muss. Dies gelingt insbesondere dann, wenn das Türelement und das Fensterelement jeweils auf einer Seite um eine gemeinsame Schwenkachse verstellbar an der Fahrerkabine angeordnet sind. Die beiden Elemente sind dann jeweils auf einer Seite der Fahrerkabine um eine gemeinsame, insbesondere im Wesentlichen vertikal verlaufende, Schwenkachse verstellbar an der Fahrerkabine angeordnet. Erfindungsgemäß ist die Schwenkachse der Tür-Fenster-Einheit der einen Seite der Fahrerkabine dann in eine Fahrrichtung gesehen nach vorn und die Schwenkachse der Tür-Fenster-Einheit auf der anderen Seite der Fahrerkabine in diese Fahrrichtung gesehen nach hinten versetzt an der Seite der Fahrerkabine angeordnet. Der Versatz bezieht sich dabei auf die Mitte der Erstreckung der Fahrerkabine in Fahrrichtung der Baumaschine.

Bevorzugt sind die Tür-Fenster-Einheiten im Wesentlichen symmetrisch, besonders spiegelsymmetrisch, insbesondere in Bezug auf ihre Außenkontur, ausgebildet. Die Außenkontur bezeichnet den Außenrand der Tür-Fenster-Einheit, insbesondere um ihre flächenmäßig größte Seitenfläche. In Bezug auf eine Flachseite (Seite mit der größten Flächenerstreckung in im Wesentlichen einer Ebene, beispielsweise die Außenseite im montierten Zustand) ist die Tür-Fenster-Einheit somit insbesondere derart ausgebildet, dass eine parallel zu ihrer Längserstreckung verlaufende Symmetrieachse vorhanden ist. Damit ist es möglich, dass die Fahrerkabine mit den Tür-Fenster-Einheiten von beiden Seiten ein nahezu identisches Erscheinungsbild aufweist, was gemeinhin als ästhetisch vorteilhaft empfunden wird, obwohl die Tür-Fenster-Einheiten gegenläufig zueinander öffnen. Die Spiegelsymmetrieachse verläuft dabei vertikal in Bezug auf die in der Fahrerkabine installierte Tür-Fenster-Einheit. Von der Symmetrie nicht umfasst sind allerdings in der Regel Bedienelemente, wie beispielsweise Türgriffe, und Lagereinrichtungen, wie beispielsweise die nur auf einer Seite erforderlichen Türscharniere.

Es ist ferner bevorzugt, wenn die Tür-Fenster-Einheit der rechten Seite und der linken Seite zueinander baugleich sind. Dies ermöglicht eine vereinfachte Herstellung sowie die vorteilhafte Verminderung der zur Fertigung der Baumaschine insgesamt erforderlichen unterschiedlichen Bauteile. Dadurch, dass die beiden Tür-Fenster-Einheiten auf beiden Seiten der Fahrerkabine in eine Fahrrichtung gesehen gegensinnig zueinander öffnen, ist es beispielsweise möglich, dass aus der Sicht des auf der Seite vor der Fahrerkabine stehenden Bedieners die Tür-Fenster-Einheit sowohl auf der rechten als auch auf der linken Seite der Baumaschine in die gleiche Richtung, beispielsweise nach links, öffnet.

Bevorzugt sind die Tür-Fenster-Einheiten der rechten und der linken Seite in Bezug auf eine horizontale Referenzebene punktsymmetrisch an der Fahrerkabine der Baumaschine angeordnet. Dies bedeutet mit anderen Worten, dass in Bezug auf eine horizontale Referenzebene die beiden Tür-Fenster-Einheiten durch einen Spiegelpunkt gespiegelt an der Baumaschine bzw. der Fahrerkabine zueinander baugleich vorliegen und angeordnet sind. Die Punktsymmetrie kann so weit gehen, dass die symmetrische Anordnung über die gesamte Vertikalerstreckung der Tür-Fenster-Einheiten erfolgt und beide Tür-Fenster-Einheiten somit achssymmetrisch zueinander um eine vertikale Spiegelachse an der Baumaschine bzw. der Fahrerkabine angeordnet sind.

Die Vorteile der Erfindung treten insbesondere bei solchen Baumaschinen besonders deutlich hervor, die im Arbeitsbetrieb einerseits ein zuverlässiges Rangieren an seitlichen Hindernissen entlang erfordern und zugleich häufig einen Wechsel zwischen Vorwärts- und Rückwärtsfahrrichtung aufweisen. Solche Arbeitsbedingungen treten insbesondere bei Bodenverdichtungsmaschinen, insbesondere Gummiradwalzen oder Kombiwalzen, auf. Eine Gummiradwalze umfasst als Fahreinrichtungen vordere und hintere Gummiräder auf, über die die Bodenverdichtung erfolgt. Eine Kombiwalze weist wenigstens eine Bandage sowie ein oder mehrere Gummiräder auf. Dadurch, dass häufige Fahrtrichtungswechsel auftreten und die Maschinen regelmäßig nah an Hindernissen vorbeigeführt werden müssen, ist insbesondere hier eine gute Sicht auf die Seite der Maschine von der Fahrerkabine aus gefragt. Diese Maschinen weisen im Übrigen häufig den vorstehend beschriebenen Versatz der vorderen und hinteren Fahreinrichtungen auf, so dass mit Hilfe der Erfindung optimale Sichtverhältnisse auf die jeweilige Nullseite der vorderen und der hinteren Fahreinrichtung möglich sind.

Ein weiterer Aspekt der Erfindung besteht in einem Verfahren zum Betrieb einer Baumaschine, insbesondere einer Baumaschine gemäß den vorstehenden Ausführungen, wobei die Baumaschine eine Fahrerkabine mit, in eine Fahrrichtung der Baumaschine gesehen, einer rechten und einer linken Tür-Fenster-Einheit, die jeweils zwischen einer geschlossenen und einer geöffneten Position verstellbar sind, und vordere und hintere Fahreinrichtungen aufweist, die quer zur Fahrrichtung versetzt angeordnet sind und zu einander gegenüberliegenden Seiten jeweils eine Nullseite aufweisen und auf der jeweiligen Nullseite mit einer ihrer Stirnseiten insbesondere bündig mit einer Seite des Maschinenrahmens abschließen oder über diesen nach außen vorstehen. Erfindungsgemäß ist es nun vorgesehen, dass bei einem Fahren der Baumaschine in Vorwärts- und Rückwärtsrichtung jeweils die auf der jeweiligen Nullseite befindliche Tür-Fenster-Einheit in die geöffnete Position entgegen der aktuellen Fahrrichtung verstellt wird. Abhängig davon, ob die Baumaschine gerade vorwärts oder rückwärts fährt, kann der Fahrer der Baumaschine somit die jeweils auf der Nullseite befindliche Tür-Fenster-Einheit entgegen der aktuellen Fahrrichtung öffnen. Damit ist es möglich, sowohl für die Vorwärtsfahrt als auch für die Rückwärtsfahrt optimale Sichtverhältnisse auf die Nullseite der jeweiligen Fahreinrichtung zu bekommen.

Ein weiterer Grundgedanke der Erfindung liegt schließlich in einem Verfahren zum Herstellen einer Baumaschine, insbesondere einer Baumaschine gemäß den vorstehenden Ausführungen. Wesentlich für dieses erfindungsgemäße Verfahren ist, dass das Anbringen von Tür-Fenster-Einheiten an einer Fahrerkabine derart erfolgt, dass die Tür-Fenster-Einheit auf der einen Seite in eine Fahrrichtung öffnend und die Tür-Fenster-Einheit auf der anderen Seite entgegen diese Fahrrichtung öffnend ist. Damit können beispielsweise auf beiden Seiten der Fahrerkabine baugleiche Tür-Fenster-Einheiten verwendet werden.

Im Folgenden wird die Erfindung anhand der in den Figuren gezeigten Ausführungsbeispiele näher beschrieben. Es zeigen schematisch:
- Figur 1:: Eine perspektivische Seitenansicht auf eine Gummiradwalze;
- Figur 2:: eine Draufsicht auf die Gummiradwalze aus Fig. 1;
- Figur 3:: Prinzipansicht zum Versatz zwischen den vorderen und hinteren Fahrwerkseinheiten der Gummiradwalze;
- Figur 4:: die Draufsicht aus Fig. 2 mit in geöffneter Position befindlichen Tür-Fenster-Einheiten;
- Figur 5:: die Gummiradwalze aus Fig. 1 in perspektivischer Schrägansicht mit geöffnetem Fensterelement; und
- Figur 6:: die Gummiradwalze aus Fig. 1 in perspektivischer Schrägansicht mit geöffneter Tür-Fenster-Einheit.

Baugleiche und gleichwirkende Bauteile sind mit gleichen Bezugszeichen bezeichnet. Sich wiederholende Bauteile sind nicht in jeder Figur gesondert bezeichnet.

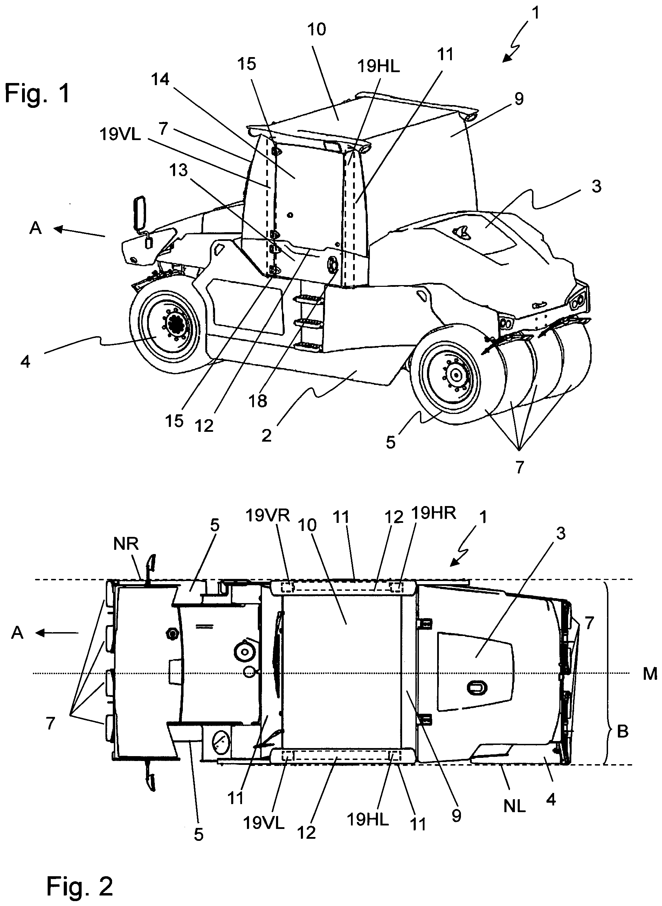

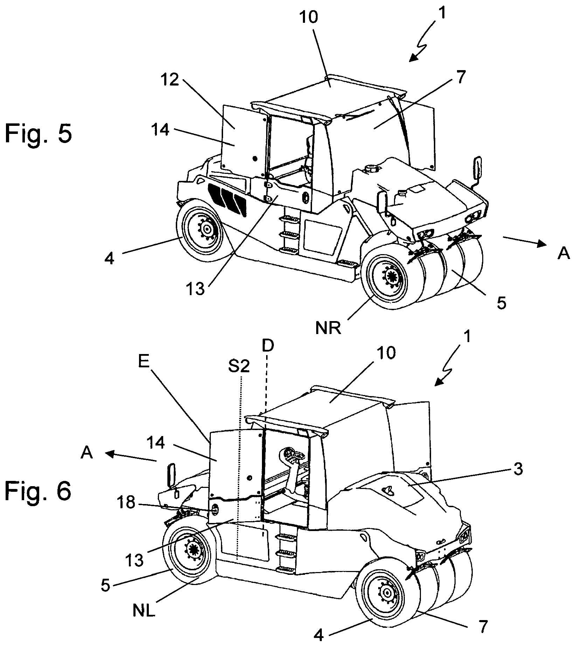

Figur 1 zeigt eine Baumaschine 1, konkret vom Typ Gummiradwalze. Wesentliche Elemente der Baumaschine 1 sind ein Maschinenrahmen 2, ein Antriebsmotor 3, konkret ein Dieselmotor, vordere Fahreinrichtungen 4 sowie hintere Fahreinrichtungen 5 und eine Fahrerkabine 6. Die vordere und hintere Fahreinrichtung 4 und 5 umfassen jeweils vier einzelne Gummiräder 7, die jeweils koaxial und quer zur Vorwärtsrichtung A nebeneinanderliegend angeordnet sind. Wesentliche Elemente der Fahrerkabine 6 sind eine Frontscheibe 8, eine Heckscheibe 9, ein Dach 10 sowie zur rechten und zur linken Seite der Baumaschine 1 bezogen auf die Vorwärtsrichtung A eine Seitenwand 11, umfassend jeweils eine Tür-Fenster-Einheit 12. Jede Tür-Fenster-Einheit 12 weist ein Türelement 13 sowie ein Fensterelement 14 auf, die jeweils für sich über Schwenkscharniere 15 schwenkbar gegenüber der übrigen Fahrerkabine 6 angeordnet sind. Die Schwenkscharniere verbinden die Tür-Fenster-Einheit 12 mit einem Seitenbereich der übrigen Seitenwand 11, also an einer Stelle, die zu einem Ende der Seitenwand 11 von der Mitte der Seitenwand 11 in Fahrrichtung versetzt ist. Konkret handelt es sich hierbei zur Anlenkung der Schwenkscharniere um jeweils eine Fahrzeugsäule 19, die als Teil der Fahrerkabine 6 mit weiteren Komponenten eine ROPS-Struktur der Fahrerkabine 6 bilden. Die beiden A-Säulen sind dabei mit 19VL (Fahrzeugsäule in Vorwärtsrichtung vorne links) und 19VR (Fahrzeugsäule in Vorwärtsrichtung vorne rechts) und die beiden B-Säulen mit 19HL (Fahrzeugsäule in Vorwärtsrichtung hinten links) und 19HR (Fahrzeugsäule in Vorwärtsrichtung hinten rechts) bezeichnet (insbesondere gemäß Fig. 2). Die Tür-Fenster-Einheiten 12 sind zwischen einer geschlossenen Position, wie in Figur 1 gezeigt, und einer geöffneten Position, wie nachstehend näher insbesondere zu den Figuren 5 und 6 erläutert, verschwenkbar. Die Fahrrichtung bezeichnet eine Vorwärts- oder Rückwärtsfahrt der Baumaschine 1, wobei in den Figuren konkret die Vorwärtsrichtung A bezeichnet ist (und die Rückwärtsrichtung entsprechend gegenläufig ist).

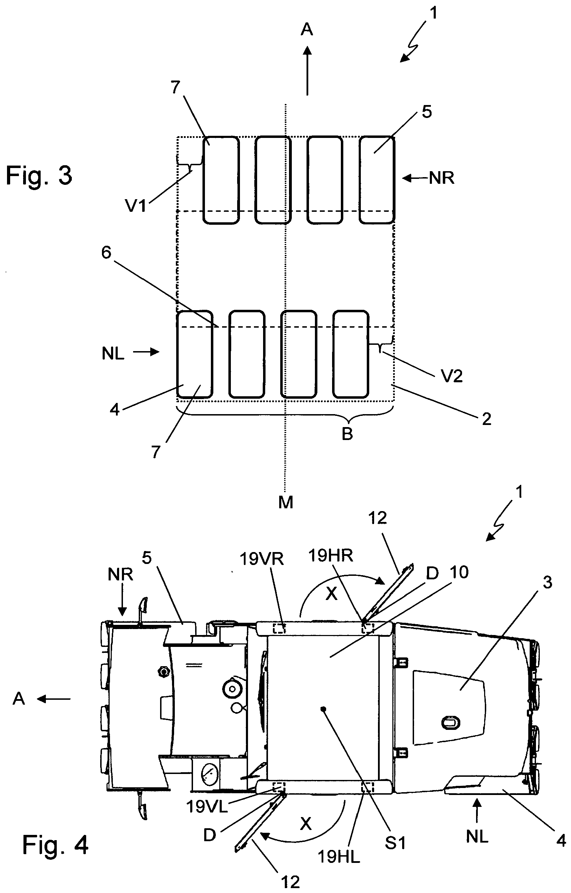

Die vordere Fahreinrichtung 5 und die hintere Fahreinrichtung 4 sind in Bezug auf die Maschinenlängsmitte M versetzt zueinander angeordnet. Dies ergibt sich beispielsweise aus der Draufsicht gemäß Figur 2. Die Maschinenlängsmitte M bestimmt sich in der Horizontalebene durch eine Längslinie, die quer zur Arbeitsrichtung A den gleichen Abstand zu den beiden maximalen Außenpunkten der Baumaschine 1 aufweist, bzw. in der Mitte der Breite B der Baumaschine 1 in Fahrrichtung verläuft, wobei Verstellelemente bzw. Anbauteile, wie beispielsweise Außenspiegel etc., zur Bestimmung der Maschinenlängsmitte M nicht mit berücksichtigt werden. Ausschlaggebend ist hier insbesondere der Verlauf des Maschinenrahmens 2. Figur 2 verdeutlicht dabei, dass die vordere Fahreinrichtung 5 mit ihrem außen rechts liegenden Gummirad 7 zumindest bündig mit dem Maschinenrahmen 2 abschließt bzw. sogar etwas zur Seite hin über die Längskante des Maschinenrahmens 2 vorsteht. Auf dieser Seite weist die vordere Fahreinrichtung 5 somit die Nullseite NR auf. Auf der linken Seite ist das außenliegende Gummirad dagegen gegenüber der Außenseite des Maschinenrahmens zur Maschinen Längsmitte M hin versetzt (Abstand V1 in Fig. 3). Die hintere Fahreinrichtung 4 schließt dagegen mit ihrem links außenliegenden Gummirad zumindest bündig mit dem Maschinenrahmen 2 ab bzw. steht dort sogar etwas über die Längskante des Maschinenrahmens zur Seite vor und bildet dort die Nullseite NL. Entsprechend ist das rechte Gummirad 7 der hinteren Fahreinrichtungen 4 zur Maschinenlängsmitte M hin mit dem Versatz V2 (in Fig. 3) eingerückt. Figur 3 verdeutlicht diese Anordnung von Maschinenrahmen 2, hinterer Fahreinrichtung 4 und vorderer Fahreinrichtung 5 sowie der Fahrerkabine 6. Die beiden einander gegenüberliegenden Nullseiten haben somit einen der Maschinenbreite B entsprechenden Abstand voneinander, wobei es auch möglich ist, dass die vordere und die hintere Fahreinrichtung 4, 5 mit ihrer Nullseite über den Maschinenrahmen zur Seite hin überstehen. Durch den Versatz der hinteren Fahreinrichtungen 4 und der vorderen Fahreinrichtungen 5 zueinander ist es möglich, die Baumaschine 1 optimal an Hindernissen vorbei zu führen, da der Fahrer der Baumaschine 1 von der Fahrerkabine 6 aus jeweils die rechts außen oder links außen liegenden Nullseite NL, NR zum Dirigieren der Maschine vom Fahrstand 6 aus zur Orientierung nutzen kann.

Um zu verhindern, dass gegebenenfalls Lagerungen der Tür-Fenster-Einheiten 12 oder diese selbst beim Blick auf die jeweilige Nullseite NR, NL von der Fahrerkabine aus als störend empfunden werden, ist es nun vorgesehen, dass die Tür-Fenster-Einheiten 12 der beiden Seiten (rechts und links) der Baumaschine 1 in eine Fahrrichtung gesehen in einander entgegengesetzte Richtungen von ihrer geschlossenen Position in die geöffnete Position verstellbar sind. Hierzu ist in Figur 4 die Draufsicht aus Figur 2 mit jeweils in der geöffneten Position befindlichen Tür-Fenster-Einheiten 12 gezeigt. Die Öffnungsbewegung der Tür-Fenster-Einheiten 12 aus der geschlossenen Position in die jeweils geöffnete Position ist mit dem Pfeil X bezeichnet. Dabei schwenken die Tür-Fenster-Einheiten 12 jeweils um eine im Wesentlichen vertikal verlaufende Schwenkachse D. Figur 4 verdeutlicht, dass in Vorwärtsrichtung A gesehen die auf der rechten Seite der Baumaschine 1 angeordnete Tür-Fenster-Einheit 12 entgegen der Vorwärtsrichtung A und die auf der linken Seite der Baumaschine 1 angeordnet Tür-Fenster-Einheit 12 in Vorwärtsrichtung A ausschwenkbar an der Fahrerkabine 6 angeordnet ist. Die Öffnungsseite der jeweiligen Tür-Fenster-Einheit 12, d.h. diejenige Seite, auf der die Tür-Fenster-Einheit 12 von der übrigen Fahrerkabine zum Öffnen weggeschwenkt wird, ist somit auf dem in Fahrrichtung der Baumaschine 1 gesehen der jeweiligen Nullseite NR, NL zugewandten Bereich der Fahrerkabine angeordnet. Entsprechend sind die Scharniere 15 jeweils in Fahrrichtung gesehen in Richtung zur von dem jeweils nullseitigen Gummirad 7 entfernten Teil der Fahrerkabine 6 angeordnet. Zum Öffnen werden die beiden Tür-Fenster-Einheiten 12 somit von der mit ihrer Nullseite NL, NR auf der gleichen Seite liegenden Fahreinrichtung 4, 5 weg bewegt. Damit bieten sich sowohl für die vordere Fahreinrichtung 5 als auch für die hintere Fahreinrichtung 4 aus der Fahrerkabine 6 heraus jeweils optimale Sichtverhältnisse auf die jeweilige Nullseite NR, NL des entsprechenden Gummirades 7.

Fig. 4 verdeutlicht ferner, dass die beiden einander gegenüberliegenden Tür-Fenster-Einheiten 12 punktsymmetrisch in einer horizontalen Referenzebene bzw. um eine vertikal in ungefähr der Mitte der Fahrerkabine 6 verlaufende Symmetrieachse S1 achssymmetrisch sein. Diese Anordnung verdeutlicht die einander gegenläufige Anordnung der beiden Tür-Fenster-Einheiten 12 in Fahrrichtung der Baumaschine 1.

All dies wird letztlich insbesondere dadurch erreicht, dass die beiden Tür-Fenster-Einheiten 12 an verschiedenen Fahrzeugsäulen 19 bzw. an Fahrzeugsäulen 19 auf verschiedener Höhe in einer horizontalen Referenzebene in Bezug auf die Vorwärtsrichtung A angeordnet, insbesondere angeschlagen, sind. Dies verdeutlicht beispielsweise insbesondere die Fig. 4. Konkret ist die linke Tür-Fenster-Einheit 12 an der A-Säule 19VL angelenkt, insbesondere angeschlagen, und schwenkt somit in Vorwärtsrichtung A auf, wohingegen die rechte Tür-Fenster-Einheit 12 an der B-Säule 19HR (und eben nicht, wie üblich, auf gleicher Höhe an der Fahrzeugsäule 19VR) angeordnet, insbesondere angeschlagen, ist. Der Anlenkpunkt bzw. die Drehachse der linken Tür-Fenster-Einheit 12 ist mit andere Worten somit in Vorwärtsrichtung A von der Mitte der Fahrerkabine aus nach vorn versetzt und die Drehachse der rechten Tür-Fenster-Einheit 12 ist dagegen in Vorwärtsrichtung A von der Mitte der Fahrerkabine aus nach hinten versetzt angeordnet. In Vorwärtsrichtung A gesehen liegen die Drehachsen D somit nicht auf einer gemeinsamen Höhe, sondern durch die Lagerung an einerseits (beispielhaft) der A-Säule und andererseits (beispielhaft) der B-Säule auf unterschiedlichen Höhen. Von der Erfindung mit umfasst sind dabei auch Ausführungsformen, bei denen die Türen an anderen Fahrzeugsäulen (C-Säule, D-Säule etc.) gelagert sind. Wesentlich ist, dass sie in Bezug auf die Anordnungsreihenfolge A, B etc. nicht an Fahrzeugsäulen auf gleicher Höhe angelenkt bzw. insbesondere angeschlagen sind.

Im vorliegenden Ausführungsbeispiel umfasst die Tür-Fenster-Einheit 12 das Türelement 13 und das Fensterelement 14. Das Fensterelement 14 kann unabhängig vom Türelement 13 aus seiner geschlossenen Position in seine geöffnete Position verstellt werden. Dies ist in Figur 5 weiter veranschaulicht, bei dem das auf der rechten Seite der Baumaschine 1 befindliche Fensterelement 14 in der geöffneten Position nach hinten aufgeschwenkt und das Türelement 13 nach wie vor in der geschlossenen Position ist. Diese Positionierung der einzelnen Elemente 13, 14 der Tür-Fenster-Einheit 12 ist insbesondere dann von Vorteil, wenn die Maschine im Arbeitsbetrieb ist und der Fahrer aus der Fahrerkabine heraus das im vorliegenden Ausführungsbeispiel vordere rechte Gummirad mit der Nullseite NR einsehen möchte. Insbesondere zum Betreten und Verlassen der Fahrerkabine 6 ist es jedoch bevorzugt, wenn die Tür-Fenster-Einheit 12 als Ganzes in die geöffnete Position verstellt wird, wie in Figur 6 anhand der linken Tür-Fenster-Einheit 12 gezeigt. Ideal ist es dabei, wenn eine nicht näher gezeigte Kopplungseinrichtung vorhanden ist, die derart ausgebildet ist, dass verhindert wird, dass das Türelement 13 bei geschlossenem Fensterelement 14 für sich geöffnet werden kann und gleichzeitig über eine Betätigung des Türelements 13 sowohl das Türelement 13 als auch das Fensterelement 14 möglich ist. Ferner schwenken das Türelement 13 und das Fensterelement 14 um eine gemeinsame Schwenkachse D bzw. die Schwenkachsen der beiden Element liegen koaxial.

Beim vorliegenden Ausführungsbeispiel sind die Tür-Fenster-Einheiten 12 in Bezug auf ihre Außenkontur, d.h. ihren um die Außenfläche der Tür-Fenster-Einheit 12 verlaufenden Rand E, spiegelsymmetrisch ausgebildet. Hierzu ist zur weiteren Verdeutlichung in Figur 6 die entsprechende Spiegelsymmetrieachse S2 eingetragen. Betätigungselemente, wie beispielsweise ein Türgriff 18, und Lagerelemente, wie beispielsweise die Türscharniere 15, sind hiervon nicht mit umfasst. Durch die symmetrische Ausbildung der Tür-Fenster-Einheit 12 ist es möglich, die Kontur der Fahrerkabine 6 sowohl von der rechten als auch von der linken Seite gleich zu gestalten, obwohl die Tür-Fenster-Einheiten 12 gegensinnig öffnen, was aus ästhetischen Gesichtspunkten als vorteilhaft empfunden wird. Ferner kann eine baugleiche Tür-Fenster-Einheit 12 sowohl auf der rechten als auch auf der linken Seite der Fahrerkabine 6 installiert werden, wodurch der Bauteilaufwand zur Herstellung der Baumaschine 1 reduziert werden kann.

Das vorstehend anhand der Gummiradwalze erläuterte Ausbildungs- und Anordnungsprinzip der Tür-Fenster-Einheiten 12 lässt sich auch auf andere Baumaschinengattungen übertragen, wie beispielsweise auf Kombiwalzen.

Es versteht sich von selbst, dass der Versatz der hinteren Fahreinrichtungen 4 und der vorderen Fahreinrichtungen 5 auch umgekehrt gewählt werden kann. Der Anschlag der Tür, Fenster, Einheiten 12 wird dann entsprechend dem vorstehenden Ausführungsbeispiel umgekehrt.

## Patentansprüche

1. Baumaschine (1) umfassend
- einen Maschinenrahmen (2),
- eine Fahrerkabine (6) mit in eine Fahrrichtung (A) der Baumaschine (1) gesehen einer rechten und einer linken Tür-Fenster-Einheit (12), wobei die Tür-Fenster-Einheiten (12) zwischen einer geschlossenen und einer geöffneten Position verstellbar sind,
- einen Antriebsmotor (3) und
- vordere und hintere Fahreinrichtungen (4, 5),
**dadurch gekennzeichnet,**
**dass** die Tür-Fenster-Einheit (12) der rechten Seite und die Tür-Fenster-Einheit (12) der linken Seite von der geschlossenen Position in die geöffnete Position in eine Fahrrichtung (A) gesehen zumindest teilweise in einander entgegengesetzte Richtungen (X) verstellbar sind.

2. Baumaschine (1) gemäß Anspruch 1,
**dadurch gekennzeichnet,**
**dass** die Fahrerkabine auf beiden Seiten Fahrzeugsäulen umfasst, und dass die Tür-Fenster-Einheiten (12) jeweils an einer Fahrzeugsäule angeordnet sind, wobei die Tür-Fenster-Einheit (12) auf der einen Seite in eine Fahrtrichtung (A) gesehen an einer vorn liegende Fahrzeugsäule und die Tür-Fenster-Einheit (12) auf der anderen Seite in die Fahrtrichtung (A) gesehen an einer hinten liegende Fahrzeugsäule angeordnet ist.

3. Baumaschine (1) gemäß einem der vorhergehenden Ansprüche,
**dadurch gekennzeichnet,**
**dass** die vorderen und hinteren Fahreinrichtungen (4, 5) quer zu der Fahrrichtung (A) versetzt angeordnet sind und zu einander gegenüberliegenden Seiten jeweils eine Nullseite (NR, NL) aufweisen, auf der sie mit einer ihrer Stirnseiten insbesondere bündig mit einer Seite des Maschinenrahmens (2) abschließen, und dass die Tür-Fenster-Einheiten (12) jeweils derart angeordnet sind, dass sie von der auf der jeweiligen Nullseite (NR, NL) befindlichen Fahreinrichtung (4, 5) weg öffenbar sind.

4. Baumaschine (1) gemäß einem der vorhergehenden Ansprüche,
**dadurch gekennzeichnet,**
**dass** die Tür-Fenster-Einheiten (12) über ein Türscharnier (15) an einem Rahmen (17) der Fahrerkabine (6) und/oder an einer Fahrzeugsäule gelagert sind und zwischen ihrer geschlossenen Position und ihrer geöffneten Position verschwenkbar sind.

5. Baumaschine (1) gemäß einem der vorhergehenden Ansprüche,
**dadurch gekennzeichnet,**
**dass** die Tür-Fenster-Einheiten (12) jeweils ein Türelement (13) und ein Fensterelement (14) umfassen.

6. Baumaschine (1) gemäß Anspruch 5,
**dadurch gekennzeichnet,**
**dass** das Türelement (13) und das Fensterelement (14) einer Tür-Fenster-Einheit (12) wenigstens eines der folgenden Merkmale aufweist:
- das Fensterelement (14) ist unabhängig vom Türelement (13) öffenbar;
- das Fensterelement (14) und das Türelement (13) öffnen gleichsinnig;
- sie sind jeweils auf einer Seite um eine gemeinsame Schwenkachse (D) verstellbar an der Fahrerkabine (6) und/oder Fahrzeugsäule angeordnet.

7. Baumaschine (1) gemäß einem der vorhergehenden Ansprüche,
**dadurch gekennzeichnet,**
**dass** die Tür-Fenster-Einheiten (12) im Wesentlichen symmetrisch, insbesondere in Bezug auf ihre Außenkontur (R), ausgebildet sind.

8. Baumaschine (1) gemäß einem der vorhergehenden Ansprüche,
**dadurch gekennzeichnet,**
**dass** die Tür-Fenster-Einheiten (12) der rechten und der linken Seite der Baumaschine (1) baugleich sind.

9. Baumaschine (1) gemäß einem der vorhergehenden Ansprüche,
**dadurch gekennzeichnet,**
**dass** die Tür-Fenster-Einheiten (12) der rechten und der linken Seite in Bezug auf eine horizontale Referenzebene punktsymmetrisch an der Baumaschine (1) angeordnet sind.

10. Baumaschine (1) gemäß einem der vorhergehenden Ansprüche,
**dadurch gekennzeichnet,**
**dass** die Baumaschine (1) eine Bodenverdichtungsmaschine, insbesondere eine Gummiradwalze, ist.

11. Verfahren zum Betrieb einer Baumaschine (1), insbesondere einer Baumaschine (1) gemäß einem der vorhergehenden Ansprüche, wobei die Baumaschine (1) eine Fahrerkabine (6) mit in eine Fahrrichtung der Baumaschine (1) gesehen einer rechten und einer linken Tür-Fenster-Einheit (12), die jeweils zwischen einer geschlossenen und einer geöffneten Position verstellbar sind, und vordere und hintere Fahreinrichtungen (4, 5) aufweist, die quer zur Fahrrichtung (A) versetzt angeordnet sind und zu einander gegenüberliegenden Seiten jeweils eine Nullseite (NR, NL) aufweisen und auf der jeweiligen Nullseite (NR, NL) mit einer ihrer Stirnseiten insbesondere bündig mit einer Seite des Maschinenrahmens (2) abschließen,
**dadurch gekennzeichnet,**
**dass** bei einem Fahren der Baumaschine (1) in Vorwärts- und Rückwärtsrichtung jeweils die auf der jeweiligen Nullseite (NR, NL) befindliche Tür-Fenster-Einheit (12) in die geöffnete Position entgegen der aktuellen Fahrrichtung (A) verstellt wird.

12. Verfahren zum Herstellen einer Baumaschine (1), insbesondere einer Baumaschine (1) gemäß einem der Ansprüche 1 bis 10,
dadurch **gekennze ich net,**
dass das Anbringen von Tür-Fenster-Einheiten (12) an einer Fahrerkabine (6) derart erfolgt, dass die Tür-Fenster-Einheit (12) auf der einen Seite in eine Fahrrichtung (A) öffnend und die Tür-Fenster-Einheit (12) auf der anderen Seite entgegen diese Fahrrichtung (A) öffnend ist.

## Claims

1. A construction machine (1), comprising
- a machine frame (2);
- a driver cabin (6) with a right and a left door-window unit (12) when viewed in a traveling direction (A) of the construction machine (1), said door-window units (12) being adjustable between a closed and an open position;
- a drive engine (3); and
- front and rear traveling devices (4, 5);
**characterized in that**
the door-window unit (12) of the right side and the door-window unit (12) of the left side are adjustable from the closed position to the open position at least partially in opposite directions (X) with respect to one another when viewed in a traveling direction (A).

2. The construction machine (1) according to claim 1,
**characterized in that**
the driver cabin comprises vehicle pillars on both sides, and that the door-window units (12) are each arranged at a vehicle pillar, the door-window unit (12) on one side being arranged at a front vehicle pillar when viewed in a traveling direction (A) and the door-window unit (12) on the other side being arranged at a rear vehicle pillar when viewed in the traveling direction (A).

3. The construction machine (1) according to any one of the preceding claims,
**characterized in that**
the front and rear traveling devices (4, 5) are arranged with an offset transverse to the traveling direction (A) and towards opposite sides each include a zero side (NR, NL) on which they sit, with one of their face sides, in particular flush with one side of the machine frame (2), and that the door-window units (12) are each arranged such that they can be opened away from the traveling device (4, 5) located on the respective zero side (NR, NL).

4. The construction machine (1) according to any one of the preceding claims,
**characterized in that**
the door-window units (12) are mounted at a frame (17) of the driver cabin (6) and/or a vehicle pillar via a door hinge (15) and can swivel between their closed position and their open position.

5. The construction machine (1) according to any one of the preceding claims,
**characterized in that**
the door-window units (12) each comprise a door element (13) and a window element (14).

6. The construction machine (1) according to claim 5,
**characterized in that**
the door element (13) and the window element (14) of a door-window unit (12) comprise at least one of the following features:
- the window element (14) can be opened independently of the door element (13);
- the window element (14) and the door element (13) open in a same direction;
- they are arranged at the driver cabin (6) and/or the vehicle pillar such that they are each adjustable about a shared swivel axis (D) on one side.

7. The construction machine (1) according to any one of the preceding claims,
**characterized in that**
the door-window units (12) are configured essentially symmetrical, in particular with respect to their outer contour (R).

8. The construction machine (1) according to any one of the preceding claims,
**characterized in that**
the door-window units (12) of the right and the left side of the construction machine (1) are identical in construction.

9. The construction machine (1) according to any one of the preceding claims,
**characterized in that**
the door-window units (12) of the right and the left side are arranged at the construction machine (1) in a centrosymmetrical manner with respect to a horizontal reference plane.

10. The construction machine (1) according to any one of the preceding claims,
**characterized in that**
the construction machine (1) is a ground compaction machine, in particular a rubber-tired roller.

11. A method for operating a construction machine (1), in particular a construction machine (1) according to any one of the preceding claims, wherein the construction machine (1) includes a driver cabin (6) with, when viewed in a traveling direction of the construction machine (1), a right and a left door-window unit (12) which are each adjustable between a closed and an open position, and front and rear traveling devices (4, 5) which are arranged with an offset transverse to the traveling direction (A) and each include a zero side (NR, NL) towards opposite sides and, with one of their face sides, in particular sit flush with one side of the machine frame (2) on the respective zero side (NR, NL),
**characterized in that**
the door-window unit (12) respectively located on the respective zero side (NR, NL) is adjusted to the open position against the current traveling direction (A) both in the case of forward as well as backward travels of the construction machine (1).

12. A method for manufacturing a construction machine (1), in particular a construction machine (1) according to one of claims 1 to 10,
**characterized in that**
the attachment of door-window units (12) to a driver cabin (6) is performed such that the door-window unit (12) on one side opens in a traveling direction (A) and the door-window unit (12) on the other side opens against this traveling direction (A).

## Revendications

1. Engin de chantier (1) comprenant
- un châssis de machine (2) ;
- une cabine conducteur (6), avec, observé dans une direction de déplacement (A) de l'engin de chantier, une unité (12) de porte-fenêtre du côté droit et une unité de porte-fenêtre du côté gauche, lesdites unités de porte-fenêtre (12) étant réglables entre une position fermée et une position ouverte ;
- un moteur d'entraînement (3) ; et
- des dispositifs de déplacement avant et arrière (4, 5) ;
***caractérisé en ce que***
l'unité (12) de porte-fenêtre du côté droit et l'unité (12) de porte-fenêtre du côté gauche sont réglables de la position fermée à la position ouverte, au moins partiellement dans des directions opposées (X) l'une à l'autre comme observé dans une direction de déplacement (A).

2. Engin de chantier (1) selon la revendication 1,
***caractérisé en ce que***
la cabine conducteur comprend des montants de véhicule sur les deux côtés, et ***en ce que*** les unités (12) de porte-fenêtre sont respectivement disposées sur un montant du véhicule, l'unité (12) de porte-fenêtre sur l'un des côtés étant agencée sur un montant avant du véhicule observé dans une direction de déplacement (A) et l'unité (12) de porte-fenêtre sur l'autre côté étant agencée sur un montant arrière du véhicule observé dans une direction de déplacement (A).

3. Engin de chantier (1) selon l'une quelconque des revendications précédentes,
***caractérisé en ce que***
les dispositifs de déplacement avant et arrière (4, 5) sont agencés avec un décalage transversal par rapport à la direction de déplacement (A) et sur des côtés mutuellement opposés comprennent chacun un côté zéro (NR, NL) sur lequel ils se trouvent, avec l'une de leurs faces frontales en particulier affleurant d'un côté du châssis (2) de machine, et ***en ce* que** les unités (12) de porte-fenêtre sont respectivement agencées de telle sorte qu'elles puissent être ouvertes loin du dispositif de déplacement (4, 5) situé sur le côté zéro respectif (NR, NL).

4. Engin de chantier (1) selon l'une quelconque des revendications précédentes,
***caractérisé en ce que***
les unités (12) de porte-fenêtre sont montées sur un cadre (17) de la cabine conducteur (6) et/ou un montant du véhicule via une charnière (15) de porte et peuvent pivoter entre leur position fermée et leur position ouverte.

5. Engin de chantier (1) selon l'une quelconque des revendications précédentes,
***caractérisé en ce que***
les unités (12) de porte-fenêtre comprennent chacune un élément de porte (13) et un élément de fenêtre (14).

6. Engin de chantier (1) selon la revendication 5,
***caractérisé en ce que***
l'élément de porte (13) et l'élément de fenêtre (14) d'une unité (12) de porte-fenêtre comprennent au moins l'une des caractéristiques suivantes :
- l'élément de fenêtre (14) peut être ouvert indépendamment de l'élément de porte (13) ;
- l'élément de fenêtre (14) et l'élément de porte (13) s'ouvrent dans une même direction ;
- ils sont disposés sur la cabine conducteur (6) et/ou sur le montant du véhicule de telle sorte que chacun soit réglable autour d'un axe de pivotement partagé (D) sur un côté.

7. Engin de chantier (1) selon l'une quelconque des revendications précédentes,
***caractérisé en ce que***
les unités (12) de porte-fenêtre sont configurées de manière essentiellement symétrique, en particulier en ce qui concerne leur contour extérieur (R).

8. Engin de chantier (1) selon l'une quelconque des revendications précédentes,
***caractérisé en ce que***
les unités (12) de porte-fenêtre du côté droit et du côté gauche de l'engin de chantier (1) sont de construction identique.

9. Engin de chantier (1) selon l'une quelconque des revendications précédentes,
***caractérisé en ce que***
les unités (12) de porte-fenêtre du côté droit et du côté gauche sont agencées sur l'engin de chantier (1) d'une manière centro-symétrique par rapport à un plan de référence horizontal.

10. Engin de chantier (1) selon l'une quelconque des revendications précédentes,
***caractérisé en ce que***
l'engin de chantier est un engin de compactage du sol, en particulier un rouleau compacteur à pneus.

11. Procédé d'utilisation d'un engin de chantier (1), en particulier d'un engin de chantier (1) selon l'une quelconque des revendications précédentes, dans lequel l'engin de chantier (1) comprend une cabine conducteur (6), avec, observé dans une direction de déplacement de l'engin de chantier (1), une unité (12) de porte-fenêtre du côté droit et une unité de porte-fenêtre du côté gauche, qui sont réglables entre une position fermée et une position ouverte, et des dispositifs de déplacement avant et arrière (4, 5) qui sont agencés avec un décalage transversal par rapport à la direction de déplacement (A) et comprennent chacun un côté zéro (NR, NL) vers des côtés opposés, et, avec l'une de leurs faces frontales en particulier se trouvant au ras d'un côté du châssis (2) de machine sur le côté zéro respectif (NR, NL),
***caractérisé en ce que***
l'unité (12) de porte-fenêtre respectivement située sur le côté zéro respectif (NR, NL) est amenée en position ouverte dans le sens opposé à la direction de déplacement en cours (A), dans le cas de déplacements à la fois en marche avant tout comme en marche arrière de l'engin de chantier (1).

12. Procédé de fabrication d'un engin de construction (1), en particulier un engin de construction (1) selon l'une quelconque des revendications 1 à 10,
***caractérisé en ce que***
la fixation d'unités (12) de porte-fenêtre à une cabine conducteur (6) est réalisée de telle sorte que l'unité (12) de porte-fenêtre sur un côté ouvre dans une direction de déplacement (A) et l'unité (12) de porte-fenêtre sur l'autre côté s'ouvre dans le sens opposé à cette direction de déplacement (A).
